## Europäisches Patentamt

## European Patent Office

## Office européen des brevets

(11) Publication number: **0 052 478**
**B1**

# EUROPEAN PATENT SPECIFICATION

(45) Date of publication of patent specification: **13.03.85**

(21) Application number: **81305359.2**

(22) Date of filing: **11.11.81**

(51) Int. Cl.⁴: **F 01 N 3/02, F 02 B 51/02, C 10 L 10/00**

(54) Method of operating a diesel engine, and a diesel fuel composition.

(30) Priority: **13.11.80 US 206592**
**27.08.81 US 296689**

(43) Date of publication of application:
**26.05.82 Bulletin 82/21**

(45) Publication of the grant of the patent:
**13.03.85 Bulletin 85/11**

(84) Designated Contracting States:
**DE FR GB IT SE**

(56) References cited:
**DE-A-2 413 520**
**GB-A- 917 035**
**GB-A-2 064 983**
**US-A-4 276 066**

(73) Proprietor: **FORD MOTOR COMPANY LIMITED**
**Eagle Way**
**Brentwood Essex CM13 3BW (GB)**
㊻ **GB**

(73) Proprietor: **FORD-WERKE AKTIENGESELLSCHAFT**
**Ottoplatz 2 Postfach 21 03 69**
**D-5000 Köln 21 (DE)**
㊻ **DE**

(73) Proprietor: **FORD FRANCE SOCIETE ANONYME**
**344 Avenue Napoléon Bonaparte B.P. 307**
**F-92506 Rueil Malmaison Cedex (FR)**
㊻ **FR**

(73) Proprietor: **Ford Motor Company**
**The American Road**
**Dearborn, MI 48121 (US)**
㊻ **IT SE**

(72) Inventor: **White, Jerry E**
**23429 Military**
**Dearborn Heights Michigan (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

EP 0 052 478 B1

## Description

This invention relates to diesel engines, methods of operating such engines and to diesel engine fuel composition.

Because of their relatively good fuel economy, diesel engines have become popular for propulsion units for motor vehicles in recent years. However, these engines do emit soot because of the inherent combustion characteristics of diesel engines. In order to reduce the amount of soot emitted, it is known to add to the exhaust system of diesel engines trap structures which catch and hold the soot particles until such time as engine operating conditions or an external source of heat can produce a relatively high exhaust gas temperature which results in the oxidation of the soot particles trapped therein.

Many materials are known to reduce the ignition temperature of soot. Among these materials are manganese, lead and copper. EPA Paper 600/7—79—232b, entitled "Assessment of Diesel Particulate Control: Direct and Catalytic Oxidation", and a paper entitled "Catalysis of Carbon Gasification", published in *Chemistry and Physics of Carbon* (P. L. Webber Jr., Editor), Volume 4, pp. 287—383, Marcel Dekker, NY, 1968, illustrate the catalytic effect of such materials on the combustion of carbon. Hitherto, however, it has not been possible to utilise these facts in order to lower the ignition temperature of soot in a trap structure.

In accordance with the present invention, there is provided a method of operating a diesel engine which comprises the steps of effecting combustion of a diesel fuel within the engine, passing exhaust gases from the engine through a trap thereby removing particles of soot therefrom, and heating the trap to a temperature sufficient to effect oxidation of the particles of soot, characterised by passing particles of a catalyst which reduces the oxidation temperature of the soot into the trap with the exhaust gases. Preferably, the catalyst is introduced into the combustion chamber(s) of the engine. The diesel fuel is oxidized in the combustion chambers of a diesel engine to form exhaust gases in which some of the diesel fuel is converted to soot. Also, during this oxidizing process, the catalyst material is oxidized to a highly dispersed oxide form. The so-generated exhaust gases are then passed out of the combustion chambers and into the trap which, for example, may comprise a structure in which the exhaust gases are passed through walls of porous ceramic material.

Particles of highly dispersed catalyst material are incorporated in or absorbed onto the soot during any one, any combination, or all of the following: (a) the time the soot is in the combustion chambers, (b) the time the soot is passing from the combustion chambers of the diesel engine to the trap structure, (c) while the soot is trapped in the trap structure. Periodically during the operation of the engine, the temperature within the trap structure rises sufficiently to permit catalytic oxidation of some or all of the soot trapped in the trap structure. The temperature of this catalytic oxidation of the soot is lower than the temperature at which the soot would otherwise be oxidized if no catalyst material was present.

A suitable catalyst material is lead. Other materials such as copper or manganese have also been proven as suitable catalyst materials. Mixtures of these materials may also form a suitable catalyst material. The catalyst may be in elementary form or, preferably, in the form of a compound.

The catalyst material is preferably dissolved in the diesel fuel prior to the time that the diesel fuel is introduced into the combustion chambers. Preferably, the catalyst material may be introduced into the diesel fuel by the manufacture of the fuel so that the catalyst material is already present when the diesel fuel is purchased from a filling station. The person skilled in the art will be familiar with compounds or complexes of lead, copper or manganese which are suitable for dissolution in hydrocarbon liquids such as diesel fuel. Tetraethyl lead is an example of a suitable lead compound.

A preferred embodiment of the invention will now be described, by way of example only, with reference to the drawings, in which:

Figure 1 is a graphical presentation of data derived from regeneration tests of certain catalyzed and uncatalyzed trap structures for diesel engines; and

Figures 2 and 3 are also graphical presentations of certain data generated by experiments that were carried out to evaluate the effect of operating a diesel engine in accordance with the teachings of the method of this invention.

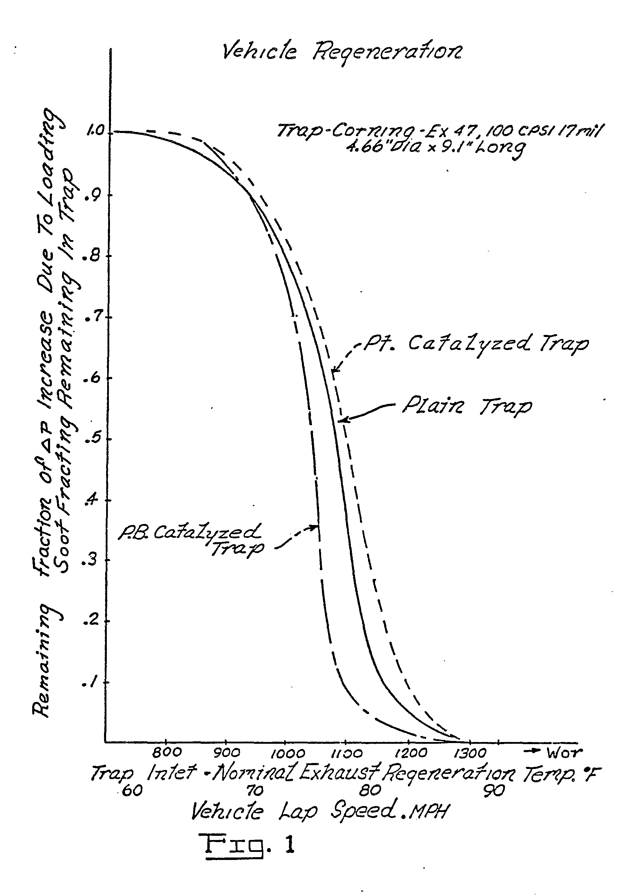

In Figure 1 there is presented some data on the regeneration of a trap structure mounted on a diesel engine. The graph presents plots for a lead catalyzed trap, a platinum catalyzed trap and a plain trap. The graph indicates that if one places catalyst material in the trap structure, the catalyst material being one which purportedly reduces the ignition temperature of soot, no substantial effect is seen. The graph indicates the exhaust temperature that must be achieved in order to get the soot in the trap to oxidize. It is interesting to note that in all cases vehicle constant cruise speeds in excess of 70 m.p.h. (110 km/h) are required in order to get any sort of significant regeneration of the trap. By regeneration it is meant that soot trapped within the trap structure is oxidized and burned away, thereby cleaning out or regenerating the trap. Thus, even though one impregnates the trap with a catalyst (in one case with a precious metal), no significant effect was seen and the use of a catalyzed trap structure is not justified.

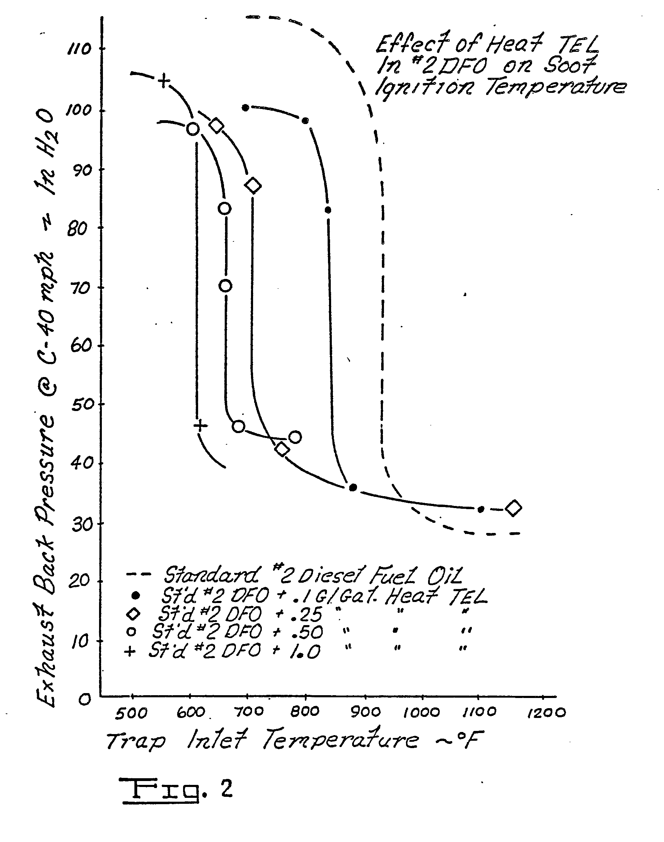

In Figure 2, there is a graphical presentation of data on the effect of fuel additives in a diesel fuel that acts as catalysts on reducing the ignition temperature of soot. The resulting information shows that if the method of operating a diesel engine as taught in this specification is carried out, a dramatic reduction in the soot ignition temperature can be achieved.

In accordance with the method of my invention, a diesel fuel, oxygen, and a catalyst material which lowers the temperature at which the soot formed in oxidation of the diesel fuel will in turn be oxidized are introduced into the combustion chambers of the diesel engine. The three different materials may be introduced as three separate streams if one desires, but I prefer to incorporate the catalyst material in the diesel fuel. This is accomplished by selecting a compound of the catalyst material (preferably organic) which is soluble in the diesel fuel. This catalyst material may then be blended into the diesel fuel at the refinery so that when a purchaser of that fuel obtains the same, it will have the catalyst material incorporated therein. In such a manner, only one tank is required on the vehicle for holding fuel.

The diesel fuel is oxidized in the combustion chambers of the diesel engine. This oxidation process forms exhaust gases in which some of the diesel fuel is converted to soot. Also, during the oxidation process, the catalyst material is oxidized to a highly dispersed oxide form.

In Figure 2, there is presented data on lead additives incorporated in diesel fuel. The extent of the catalyst effect for each different additive level is illustrated. The lead addition in this case gave a soot ignition temperature as low as 600°F (315°C), which would be reached under moderate acceleration conditions or during a vehicle cruising speed of about 50 mph (80 km/h).

In accordance with the teachings of the method of my invention, the exhaust gases resulting from the oxidation of the diesel fuel in the combustion chambers of the diesel engine are passed into a trap structure which is designed to trap the soot. The soot is trapped in the trap structure. Also, the highly dispersed catalyst material is incorporated in or adsorbed onto the soot during any one, any combination, or all of the following: (a) the time the soot is in the combustion chambers, (b) the time the soot is passing from the combustion chambers of the diesel engine to the trap structure, (c) while the soot is trapped in the trap structure.

Using this concept, it is possible that under mild acceleration conditions or moderate engine loads (break means effective pressures as low as 275 kPa (40 psi), a temperature can be reached which is sufficient to permit catalytic oxidation of some or all of the soot trapped in the trap structure. Because the catalyst material is present, the temperature of catalytic oxidation is lower than the temperature at which the soot would oxidize if no catalyst material was present. In such a manner then, extreme driving conditions are not required to generate high trap inlet temperatures in order to regenerate the trap structure. When catalysts are used, more moderate exhaust temperatures will be sufficient for trap regeneration and the more moderate temperatures can be achieved more often under routine driving conditions.

For example, from the data of Figure 2 it is seen that a trap inlet temperature of approximately 925°F (495°C) is required to regenerate the diesel trap when standard diesel fuel is used with no catalyst material. This ignition temperature would represent speed in excess of about 70 mph (110 km/h) under constant cruise conditions. This regeneration temperature is reduced in all of the catalyzed cases and is reduced in the case of one gram of lead per gallon (3.78 litres) of fuel to 585°F (307°C), which would be a constant driving speed of about 50 mph (80 km/h). In this situation, where the use of about one gram of lead as tetraethyl lead per gallon of diesel fuel appears to be the most beneficial, the cost of addition of the catalyst material would have to be balanced with the effect of that catalyst material to achieve the most economical use of the catalyst.

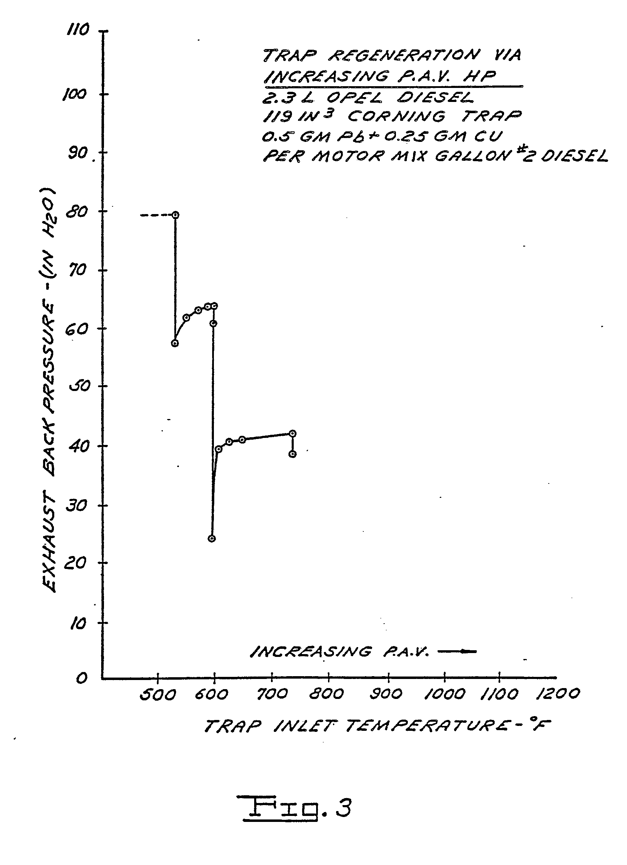

In Figure 3, there is presented data on a combined lead/copper additive incorporated in a diesel fuel. The particular combination included 0.5 gram of lead and 0.25 gram of copper per gallon (3.78 litres) of No. 2 diesel motor mix. This graphical presentation shows a reduction in exhaust back pressure and the exotherm due to soot combustion. The data presented in Figure 3 indicates that increasing engine load at a cruising 40 mph (64 km/h) condition will cause partial regeneration of the trap at a temperature as low as 530°F (276°C) and complete soot combustion at 595°F (312°C). This represents an improvement over the system in which lead is the only material used as the catalyst. Thus, the catalyst employed in this method may be a mixture of two or more materials which have the desired catalytic effects.

There are many different types of trap structures available in the market. The two most prevalent types are thin wall ceramic material traps which require the exhaust gases to flow through porous ceramic walls, thus depositing the soot on the ceramic walls. Another type of trap is one in which the trap is formed of fibrous or filamentary high temperature resistant materials interwoven into a porous bed. In these trap structures the soot is deposited on the interwoven material as the exhaust gases flow through the bed.

**Claims**

1. A method of operating a diesel engine which comprises the steps of effecting combustion of a diesel fuel within the engine, passing exhaust gases from the engine through a trap thereby removing particles of soot therefrom, and heating the trap to a temperature sufficient to effect oxidation of the particles of soot, characterised by passing particles of a catalyst which reduces the oxidation temperature of the soot into the trap with the exhaust gases.

2. A method according to Claim 1 wherein the catalyst is introduced into the combustion chamber or chambers of the engine.

3. A method according to Claim 2 wherein the catalyst is dissolved in the diesel fuel.

4. A method according to any one of Claims 1 to 3 wherein the trap comprises walls of porous ceramic material through which the gases are passed.

5. A method according to any one of Claims 1 to 4 wherein the catalyst comprises lead.

6. A method according to any one of Claims 1 to 5 wherein the catalyst comprises lead and copper.

7. A method of operating a diesel engine in which the diesel fuel is burned in combustion chambers of the diesel engine, the method comprising the steps of:

introducing into the combustion chambers of the diesel engine a diesel fuel, oxygen and a catalyst material which lowers the temperature at which soot formed during combustion of diesel fuel will in turn be oxidised;

oxidising the diesel fuel in the combustion chambers of the diesel engine to form exhaust gases in which some diesel fuel is converted to soot and said catalyst material is oxidised to a highly dispersed oxide form;

passing said exhaust gases into a trap structure which is designed to trap soot; and

trapping soot in said structure;

whereby particles of said highly dispersed catalyst material may be incorporated into said soot during any one, any combination, or all of the following: (a) the soot is in the combustion chambers, (b) the time the soot is passing from the combustion chambers of the diesel engine to said trap structure, (c) while the soot is trapped in said trap structure.

8. A diesel fuel composition containing a catalyst which reduces the oxidation temperature of carbon.

**Patentansprüche**

1. Betriebsmethode für einen Dieselmotor, bei dem man nacheinander die Verbrennung eines Dieselkraftstoffs im Motor vornimmt, die Motorabgase durch einen Abscheider leitet und dadurch Russteilchen daraus entfernt sowie den Abscheider auf eine genügend hohe Temperatur erhitzt, um Oxydation der Russteilchen zu bewirken, dadurch gekennzeichnet, dass Teilchen eines die Oxydationstemperatur des Russes erniedrigenden Katalysators mit den Abgasen in den Abscheider eingeleitet werden.

2. Methode nach Anspruch 1, worin der Katalysator in die Brennkammer bzw. -kammern des Motors eingeführt wird.

3. Methode nach Anspruch 2, worin der Katalysator im Dieselkraftstoff aufgelöst ist.

4. Methode nach einem der Ansprüche 1 bis 3, worin der Abscheider aus Wänden aus poröser Keramik besteht, durch welche die Gase hindurchgeleitet werden.

5. Methode nach einem der Ansprüche 1 bis 4, worin der Katalysator Blei enthält.

6. Methode nach einem der Ansprüche 1 bis 5, worin der Katalysator Blei und Kupfer enthält.

7. Betriebsmethode für einen Dieselmotor, bei dem der Dieselkraftstoff in Brennkammern des Dieselmotors verbrannt wird, umfassend die folgenden Stufen:

Einführung eines Dieselkraftstoffs, Sauerstoffs und eines Katalysatormaterials, das die Temperatur erniedrigt, bei der während der Verbrennung des Dieselkraftstoffs gebildeter Russ seinerseits oxydiert wird, in die Brennkammern des Dieselmotors,

Oxydation des Dieselkraftstoffs in den Brennkammern des Dieselmotors unter Bildung von Abgasen, worin der Dieselkraftstoff teilweise in Russ umgewandelt und dieses Katalysatormaterial zu einer hochdispersen Oxydform oxydiert wird,

Ueberführung dieser Abgase in einen zur Russabscheidung ausgelegten Abscheideraufbau und

Abscheidung des Russes in diesem Aufbau,

wodurch Teilchen dieses hochdispersen Katalysatormaterials während einem, irgendeiner Kombination oder sämtlichen der folgenden Zeiträume in diesen Russ eingelagert werden können: (a) während sich der Russ in den Brennkammern befindet, (b) während der Zeit des Russübergangs von den Brennkammern des Dieselmotors in diesen Abscheideraufbau und/oder (c) während der Abscheidung des Russes darin.

8. Dieselkraftstoffzusammensetzung, enthaltend einen Katalysator, der die Oxydationstemperatur von Kohlenstoff verringert.

**Revendications**

1. Un procédé d'utilisation d'un moteur Diesel qui comprend les phases consistant à effectuer la combustion d'un carburant Diesel dans le moteur, faire passer les gaz d'échappement sortant du moteur à travers un piège, pour en éliminer ainsi les particules de suie, et chauffer le piège à une température suffisante pour provoquer l'oxydation des particules de suie, caractérisé en ce qu'on introduit dans le piège, avec les gaz d'échappement, des particules d'un catalyseur qui réduit la température d'oxydation de la suie.

2. Un procédé selon la revendication 1, dans lequel le catalyseur est introduit dans la chambre ou les chambres de combustion du moteur.

3. Un procédé selon la revendication 2, dans lequel le catalyseur est dissous dans le carburant Diesel.

4. Un procédé selon une quelconque des revendications 1 à 3, dans lequel le piège comprend des parois d'une matière céramique poreuse à travers lesquelles on fait passer les gaz.

5. Un procédé selon l'une quelconque des revendications 1 à 4, dans lequel le catalyseur contient du plomb.

6. Un procédé selon l'une quelconque des revendications 1 à 5, dans lequel le catalyseur contient du plomb et du cuivre.

7. Un procédé d'utilisation d'un moteur Diesel dans lequel le carburant Diesel est brûlé dans les chambres de combustion du moteur Diesel, ce procédé comprenant les phases suivantes: introduire dans les chambres de combustion du moteur Diesel un carburant Diesel, de l'oxygène et une matière catalyseur qui abaisse la température à laquelle la suie formée pendant la combustion du carburant Diesel sera à son tour oxydée; oxyder le carburant Diesel dans les chambres de combustion du moteur Diesel pour former des gaz d'échappement dans lesquels une certaine partie du carburant Diesel est transformée en suie et la matière catalyseur est oxydée sous la forme d'un oxyde hautement dispersé, faire passer lesdits gaz d'échappement dans une structure piège qui est conçue pour emprisonner la suie; et emprisonner la suie dans ladite structure; cependant que des particules de ladite matière catalyseur hautement dispersée peuvent être incorporées dans ladite suie pendant l'un quelconque, une combinaison quelconque ou l'ensemble des instants suivants: a) la suie se trouve dans les chambres de combustion, b) le temps où la suie passe des chambres de combustion du moteur Diesel à ladite structure piège, c) pendant que la suie est emprisonnée dans ladite structure piège.

8. Une composition de carburant Diesel contenant un catalyseur qui réduit la température d'oxydation du carbone.

Vehicle Regeneration

Fig. 1

Fig. 2

Fig. 3